# EUROPÄISCHE PATENTANMELDUNG

(11) **EP 0 769 607 A1**
(43) Veröffentlichungstag der Anmeldung: **23.04.1997**
(21) Anmeldenummer: 96116424.1
(22) Anmeldetag: 14.10.1996
(51) Int. Cl.: F01M 5/02, F01M 1/12, F01M 1/16

(54) **Pumpenaggregat**

(30) Priorität: 17.10.1995 DE 19538633
(71) Anmelder: Schwäbische Hüttenwerke GmbH, D-73433 Aalen-Wasseralfingen (DE)
(72) Erfinder: Bruttel, Wolfgang, 88255 Baindt (DE); Hoffmann, Kurt, 88427 Bad Waldsee (DE); Maucher, Franz, 88339 Bad Waldsee (DE); Schreiber, Bernd, 88427 Bad Schussenried (DE); Stützle, Günther, 88427 Bad Schussenried (DE)
(74) Vertreter: Zirkel, Herbert

(57) **Zusammenfassung**

Eine Versorgungspumpe für Schmiermittel- oder Wärmeträgerflüssigkeit herkömmlicher Bauart wird durch eine Antriebseinheit unabhängig von dem Verbraucher des Schmiermittels oder der Wärmeträgerflüssigkeit angetrieben. Im Falle des Versagens der Antriebseinheit erfolgt eine Zwangsverbindung zwischen der Pumpe und den umlaufenden Teilen des Verbrauchers, um dessen Versorgung mit dem Schmiermittel oder der Wärmeträgerflüssigkeit mindestens für einen ausreichenden Notfallzeitraum sicherzustellen. Durch den selbständigen Antrieb der Versorgungspumpe kann die Versorgung des Verbrauchers entsprechend dem Bedarf an Schmiermittel oder Wärmeträgerflüssigkeit geregelt werden unabhängig von seiner eigenen Betriebscharakteristik oder Betriebszustand.

## Beschreibung

Die Erfindung betrifft in erster Linie ein selbständiges Aggregat zur Förderung von Schmieröl in Verbrennungsmotoren.

Der bedarfsgerechten Zuführung von Öl zu sämtlichen zu schmierenden Stellen kommt in einem Verbrennungsmotor wesentliche Bedeutung zu, da ein auch nur kurzzeitiger Ausfall der Schmierung wegen der hohen Geschwindigkeit, mit der reibende Teile im Verhältnis zueinander bewegt werden, und wegen der hohen Temperatur, die den einander berührenden Teilen eigen ist, zum Trockenlaufen und erhöhtem Verschleiß bis zur völligen Zerstörung der einander berührenden Metallteile führt. Bei sämtlichen zur Zeit vorhandenen Motoren werden für die Förderung deshalb zwangsfördernde Pumpen benutzt, die in direkter Antriebsverbindung mit der Kurbelwelle des Motors stehen, d.h. stets arbeiten, solange sich die Motorkurbelwelle dreht. Die eingesetzten Pumpen sind Zahnradpumpen mit Innen- oder Außenverzahnung bzw. Flügelzellenpumpen.

Der Vorteil der zwingenden Versorgung des Motors mit dem notwendigen Schmieröl wird bei dieser Konstruktion jedoch mit dem Nachteil erkauft, daß die geförderte Ölmenge direkt drehzahlabhängig ist. Damit ergeben sich unerwünschte Versorgungsverhältnisse für den Motor vor allem beim Anlauf und bei hohen Drehzahlen. Beim Anlauf des Motors wäre an sich ein hoher Volumenstrom an Öl erwünscht, weil sich noch keine tragende Ölschicht zwischen den einander berührenden Teilen aufgebaut hat. Auch sollte ein hoher Öldruck vorhanden sein, weil die Viskosität des Öls in kühlem Zustand hoch ist und sich damit starke Reibungsverluste im Ölstrom ergeben. Die Ölpumpe wird jedoch erst mit dem Anlauf des Motors in Bewegung gesetzt und fördert mit geringer Drehzahl ein geringes Ölvolumen bei noch niedrigem Druck.

Andererseits ist der Ölbedarf des Motors bei hohen Drehzahlen geringer, weil in diesem Zustand das Öl, stark aufgeheizt und deshalb mit geminderter Viskosität, hydrostatisch tragende Schichten zwischen den einander berührenden Teilen bildet, die nicht ständig ausgetauscht werden müßten. Die schnellaufende Pumpe fördert jedoch ein entsprechend hohes Ölvolumen bei hohem Druck. Da dieses vom Motor nicht aufgenommen werden kann, wird es durch ein Überdruckventil aus der Pumpe direkt in die Ölauffangwanne oder in die Pumpe selbst zurückgeführt. Es ist damit ein Energieverlust verbunden, der in Extremfällen bis zu 2% der Motorleistung erreichen kann.

Im Zuge der Motorenentwicklung sind insbesondere Otto-Motoren für immer höhere Drehzahlen konstruiert worden. Umdrehungen der Kurbelwelle in der Größenordnung von 6.000 bis 7.000/min. sind heute eher die Norm als die Ausnahme. Seit längerer Zeit werden infolgedessen Versuche unternommen, die Fördercharakteristiken von Ölpumpen für Verbrennungsmotoren zu vergleichmäßigen, d.h. insbesondere die hohen Fördervolumina bei hohen Drehzahlen "abzuschneiden". Dabei richteten sich die konstruktiven Maßnahmen auf die Pumpe selbst. Entsprechende Ausführungen sind z.B. in den deutschen Patentschriften 3005657 und 3933978 enthalten. Es hat sich jedoch gezeigt, daß auch Entwicklungen dieser beschriebenen Art das Problem nur unvollständig lösen können, sei es, weil die mechanische Gestaltung der Ölpumpe den Dauerbeanspruchungen während eines gesamten "Autolebens" nicht gewachsen sind, sei es, weil der verbleibende Energieverlust immer noch als zu hoch angesehen wird.

Mit der vorliegenden Erfindung wird ein selbständig arbeitendes Ölpumpenaggregat dargestellt, dessen Förderleistung exakt entsprechend dem im laufenden Motor ermittelten Ölbedarf geregelt werden kann. Dabei wird eine Abkopplung des Pumpenantriebs von der Kurbelwelle des Motors vorgenommen. Die bisher befürchteten Nachteile einer solchen Abkopplung werden teils durch Regelmechanismen, teils durch mechanisch wirkende Notfalleinheiten so aufgefangen, daß die verbleibende Restgefahr für den betriebenen Motor vernachlässigt werden kann.

Die Erfindung wird im folgenden anhand der Fig. 1 bis 4 erläutert. Fig. 1 zeigt in Prinzipdarstellung die Pumpe mit direkt antreibendem Elektromotor, Fig. 2 ein Prinzipbild des Gesamtsystems der Ölversorgung mit erfindungsgemäßer Pumpe, Fig. 3 ein System-Schaltbild der Steuereinheit des Aggregats, und Fig. 4 die Prinzipdarstellung der Zwangskupplung zwischen der Pumpe und einem Antriebsrad des Verbrennungsmotors.

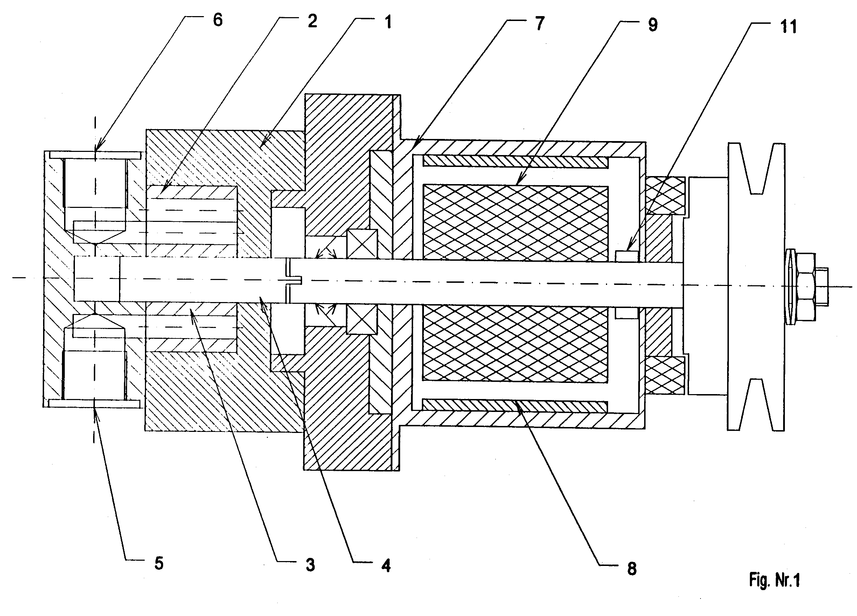

In Fig. 1 ist als Ölpumpe eine Innenzahnradpumpe mit Trochoidenverzahnung, wie z.B. des Systems "Duozentric®" in einem Längsschnitt dargestellt. In einem geschlossenen Gehäuse 1 befindet sich der Außenrotor 2, dessen Innenverzahnung mit der Außenverzahnung des Innenrotor oder Ritzels 3 in Eingriff steht. Der Innenrotor 3 wird von der Achse 4 angetrieben und versetzt den Außenrotor 2 entsprechend in Bewegung. Dabei wird das zu transportierende Öl über die Ansaugöffnung und die Ansaugniere 5 in die Hohlräume zwischen den Zähnen des Innen- und Außenläufers angesaugt und bei Weiterdrehung der Läufer in die Druckniere und Drucköffnung 6 abgegeben. Die Förderwirkung der Pumpe beruht darauf, daß der Innenläufer 3 exzentrisch zum Außenläufer 2 angeordnet ist. Die Trennung zwischen Druck- und Saugraum erfolgt auf der Achse mit größtem Zahnvolumen. Es sei angemerkt, daß die Verwendung einer Innenzahnradpumpe nur beispielhaft geschieht. Ebenso könnte ein Pumpe mit zwei außenverzahnten Läufern Verwendung finden, eine Flügelzellenpumpe oder andere Pumpensysteme.

Auf der Antriebsachse 4 des Innenläufers ist in einem zweiten Gehäuseteil 7 der Läufer 9 eines Elektromotors angeordnet, der durch das bekannte induktive Zusammenwirken der Stromflüsse in den Statorpaketen 8 und Rotorpaketen 10 in Drehung versetzt wird. Der zur Stromzuführung notwendige Kommutator 11 ist nur prinzipiell angedeutet, weil die Wirkungsweise des Elektromotors im übrigen als bekannt vorausgesetzt wird.

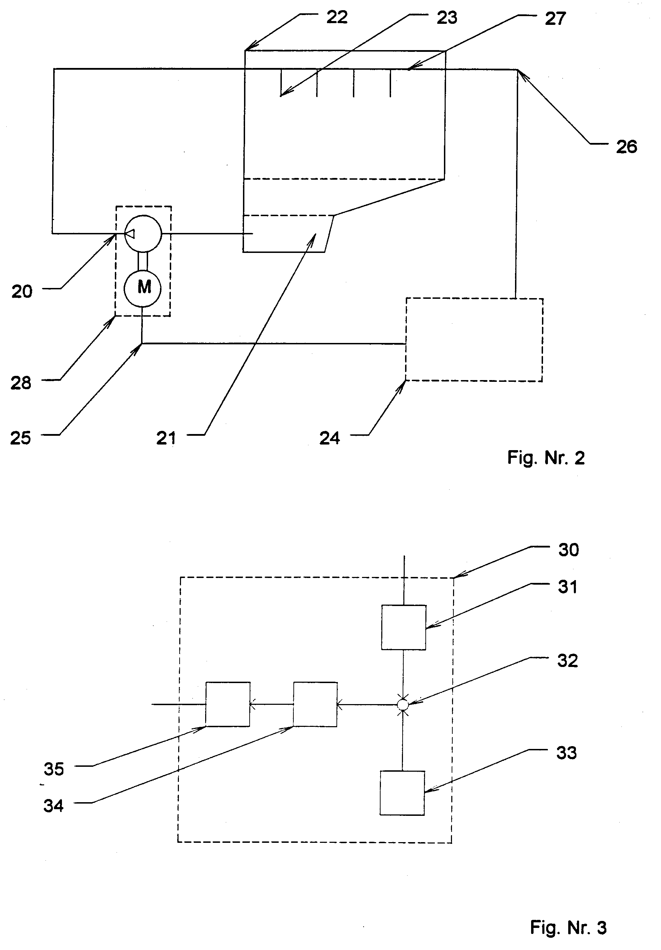

Die in Fig. 1 dargestellte Pumpe ist in Fig. 2 mit Ziff. 20 bezeichnet. Der Sauganschluß der Pumpe steht in Verbindung mit der Ölwanne 21 des Verbrennungsmotors 22, der Druckanschluß der Pumpe 20 mit den Verbrauchsstellen 23 des Motors. In der Steuereinheit 24 befinden sich sämtliche elektrischen und elektronischen Regelglieder, die für die Steuerung des die Pumpe 20 antreibenden Elektromotors erforderlich sind. Die Steuereinheit steht einerseits über eine Stelleitung 25 mit dem Elektromotor der Pumpe 20, andererseits über eine Meßleitung 26 mit einer oder mehreren Meßeinrichtungen 27 in Verbindung, die sich an ausgewählten Meßpunkten im Ölkreislauf des Motors befinden.

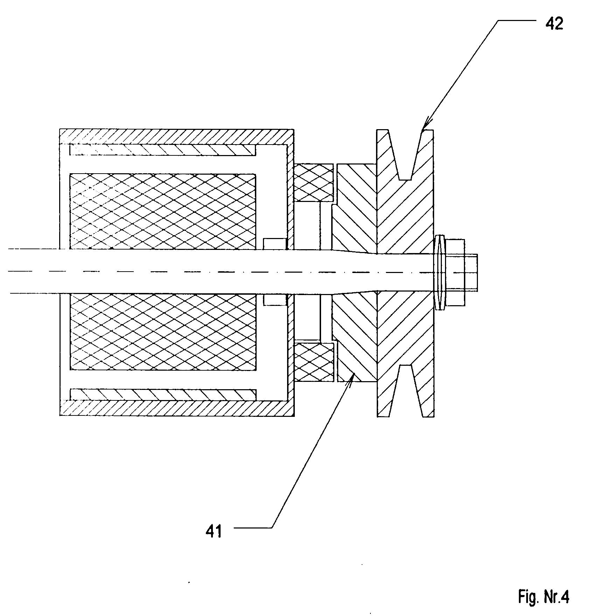

Die Steuereinheit 24 aus Fig. 2 ist in Fig. 3 mit 30 bezeichnet. Sie weist einen Druckmeßverstärker 31, einen Vergleicher 32, einen Sollwertgeber 33, einen Regler 34 und ein Stellglied für den Elektromotor 35 auf. Die Stromversorgung des Elektromotors ist in Fig. 2 wie in Fig. 3, weil bei der Beschreibung der Erfindung vernachlässigbar, nicht dargestellt.

Die Einzelaggregate der Steuereinheit 31 bis 35 sind in bekannter Ausgestaltung auf einer Platine zusammengefaßt, die nach dem Stand der Technik ausgeführt und gegen Überhitzung sowie Einwirkungen von mechanischen und elektrischen Störgrößen geschützt ist. Die Betriebsspannung der Schaltung beträgt, entsprechend dem Bordnetz von Kraftfahrzeugen, 12 V Gleichspannung, kann aber vorteilhafterweise auch höhere Spannungen, wie beispielsweise 24 V, betragen. Der informationsverarbeitende Teil der Schalteinheit kann als digitale oder analoge Schaltung ausgelegt werden, je nach dem, welche Anforderungen an die Intelligenz der Steuerung gestellt werden.

Die Komponenten des Schaltgeräts wirken wie folgt zusammen:

Der Druckmeßverstärker 31 dient der Aufbereitung des Sensorsignals und der Unterdrückung evtl. gegebener Störungen. Er bildet die Schnittstelle zu verschiedenen Druckaufnehmern und ist ein informationsverarbeitender Teil der Gesamtsteuerung.

Der Vergleicher 32 subtrahiert den von den Sensoren über den Druckmeßverstärker vermittelten Istwert vom jeweils eingestellten Sollwert und gibt eine Regeldifferenz an den Regler weiter. Damit der Vergleicher richtig arbeiten kann, müssen Soll- und Istwert in der gleichen Dimension und Kalibrierung vorliegen. Auch der Vergleicher bildet einen informationsverarbeitenden Teil der Steuerung.

Der Sollwertgeber 33 bildet die Schnittstelle zum Anwender. Hier ist das Kennfeld der Steuerung hinterlegt. Soll z.B. ein konstanter Druck realisiert werden, wird hier stets ein konstanter Wert vorgegeben. Ist es gewünscht, Druckvariationen je nach Betriebszustand des Motors zu fahren, ist hier die Signalverarbeitung aus entsprechenden Signalgebern anzuordnen. Auch diese Komponente bietet einen Teil der Informationsverarbeitung in der Steuerung.

Eingangsgröße des Reglers 34 ist die vom Vergleicher zur Verfügung gestellte Regeldifferenz. Aus dieser Regeldifferenz bereitet der Regler die Eingangsgröße für das Stellglied 35 auf. Der Regler wird dabei an die jeweilige Regelstrecke unter Regelparametern, die propotionale, integrale und differentiale Anteile enthalten, angepaßt. Auch der Regler gehört zum informationsverarbeitenden Teil der Steuerung.

Das Stellglied 35 wandelt die Ausgabe des Reglers in eine dazu proportionale Drehzahl des Elektromotors um. Dies ist der leistungsverarbeitende Teil der Steuerung, der seine Aufgabe mit möglichst geringen Verlusten an Leistung verrichten muß. Im leistungsverarbeitenden Bereich treten, u.a. abhängig von der Schaltfrequenz der Leistungsendstufe, starke Induktionsströme auf, die Schaltelemente zerstören können, mindestens aber zu starker Wärmebelastung der Steuerung führen. Die Steuerung ist deshalb in diesem Teil mit Schutzeinrichtungen zu versehen, die prinzipiell bekannter Art sind, jedoch der spezifischen Auswahl und Anpassung an die Betriebsbedingungen und die Gestaltung der Steuerung bedürfen.

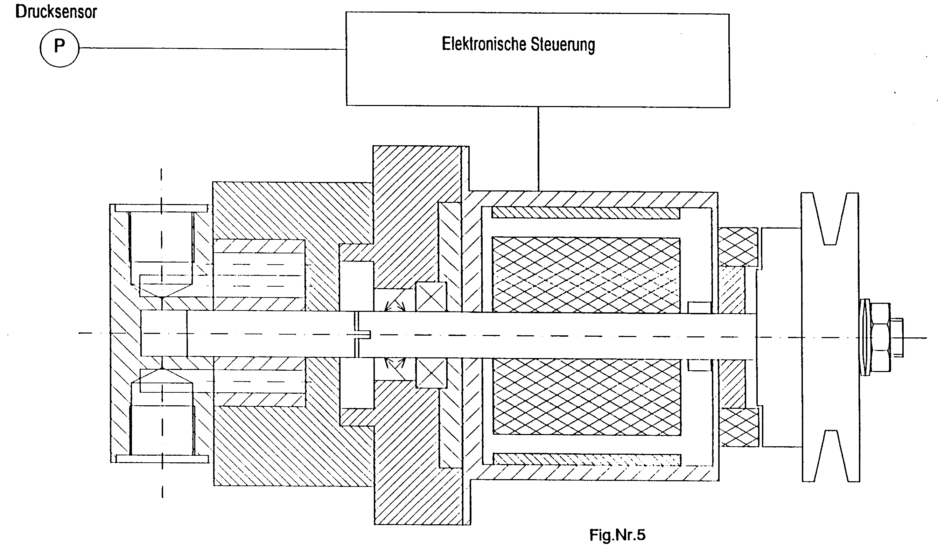

Im Betrieb des Ölpumpenaggregats können Notfälle auftreten, und zwar durch Ausfall der elektrischen Versorgung des Elektromotors, durch Ausfall eines für die Steuerung des Elektromotors notwendigen Sensors oder durch Ausfall der Steuerung überhaupt. Damit in diesen Fällen keine Beschädigung des Motors durch Fehlfunktion der Ölpumpe eintritt, kann die Steuerung oder das Pumpensystem insgesamt Notfalleinrichtungen folgender Art besitzen:
Bei Ausfall des Motorstroms, durch Absinken der Lichtmaschinendrehzahl unter einen unteren Grenzwert parallel zu schwacher Betriebsleistung, gibt die Steuerung ein zusätzliches Steuersignal ab, durch das eine mechanische oder magnetische Ankupplung in Betrieb gesetzt wird, welche die Ölpumpe weiter durch die Kurbelwelle des Motors antreiben läßt. Das entsprechende Prinzip ist in Fig. 4 dargestellt. Es zeigt den Elektromotor 40, das Kupplungsteil 41, welches die Pumpe mit einem Zahnriemen- oder Kettenrad 42 verbindet, sowie den Zahnriemen oder die Kette 43, der/die (nicht gezeigt) in Verbindung steht mit einem auf der Kurbelwelle angeordneten Antriebsrad. Die Ausführung des Kupplungselementes kann nach herkömmlicher Weise eine hydraulisch oder magnetisch während des Normalbetriebs des Ölpumpenaggregats auf Distanz gehaltene Kupplung sein, die federbeaufschlagt ist und im Störfall durch mechanisch ausgeübten Federdruck die Verbindung zwischen Kupplungsscheibe und Zahnriemenrad herstellt.

Bei Ausfall eines Sensors oder eines Sensorsignals, welches für die Steuerung der Ölpumpe notwendig ist, wird das Stellglied 35 so angesteuert, daß der die Ölpumpe treibende Motor mit einer vorab definierten Drehzahl läuft und damit jedenfalls die Maximalversorgung des Ölverbrauchers sicherstellt.

Bei Ausfall der Steuerung und damit Wegfall des Ausgabesignals des Stellgliedes wird ebenfalls die mechanische oder magnetische Ankupplung mittels des Kupplungsteils 41 in Betrieb gesetzt.

Wenn wünschenswert, kann in beiden Fällen über einen weiteren Ausgang des Reglers 34, der zur Zündleitung des Motors führt und dort einen Ausschalter betätigt, vorgesehen werden, daß der Zündstrom des durch die Pumpe mit Öl versorgten Motors unterbrochen wird, so daß das Fahrzeug zwangsläufig zum Stillstand kommt. Aus Sicherheitsgründen sollte dies jedoch mit einem Vorwarnsignal für den Fahrer verbunden sein.

Die Vorteile, die sich aus der erfindungsgemäßen Gestaltung des Ölpumpenaggregats gegenüber den bisherigen Pumpensystemen ergeben, sind für den Zeitraum während des Motorbetriebs in der folgenden Tabelle dargestellt.

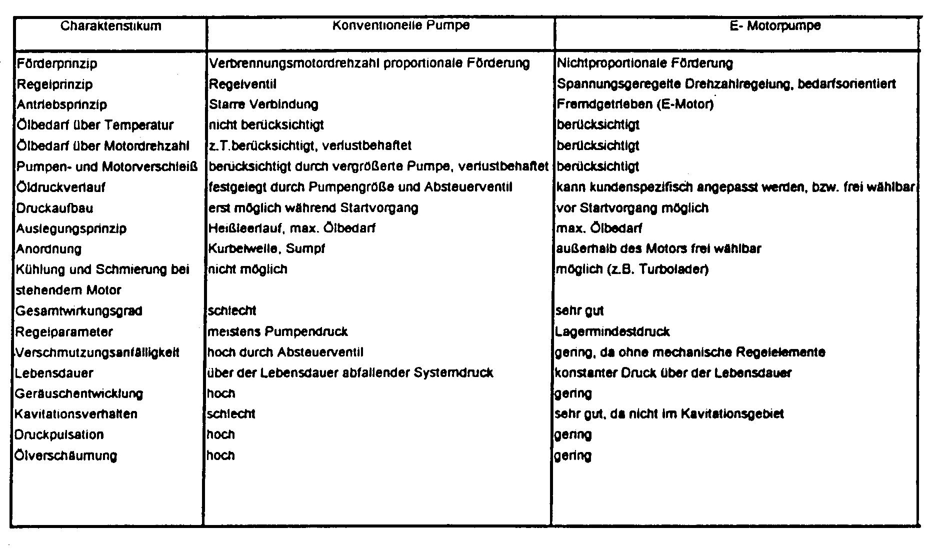

Weitere Vorteile sind:
Nach dem Stillstand des Verbrennungsmotors können wichtige Funktionselemente, wie zum Beispiel Turbolader, im Ölumlauf gekühlt werden.
Die Leistungsaufnahme des Aggregats in all seinen Betriebspunkten liegt deutlich unter der Leistungsaufnahme bisheriger Pumpensysteme.

Da die Pumpe grundsätzlich mit optimaler Betriebsgeschwindigkeit betrieben werden kann, ist es möglich, das Bauvolumen zu verringern, wodurch die Umfangsgeschwindigkeit der Verzahnung, die Kavitationsempfindlichkeit, die Ölverschäumung und die Pulsation im Schmiersystem verringert werden.

Das Überdruckventil der Pumpe, das wegen seiner Schmutzempfindlichkeit stets Schwierigkeiten bereitete, entfällt. Insgesamt ist die erfindungsgemäße Gestaltung des Pumpenaggregats damit als höchst vorteilhaft zu bezeichnen.

Es leuchtet ein, daß die beschriebene Erfindung nicht beschränkt ist auf die Anwendung bei Otto-Motoren. Sie ist einsetzbar bei jeder Art von Verbrennungsmotoren, aber auch bei Antriebs- und Getriebemaschinen anderen Zweckes und anderer Bauart, die auf eine ständige Versorgung mit Schmier- oder Kühlöl angewiesen sind, sofern die Ölbedarfskurve während des Betriebs der Maschine variiert.

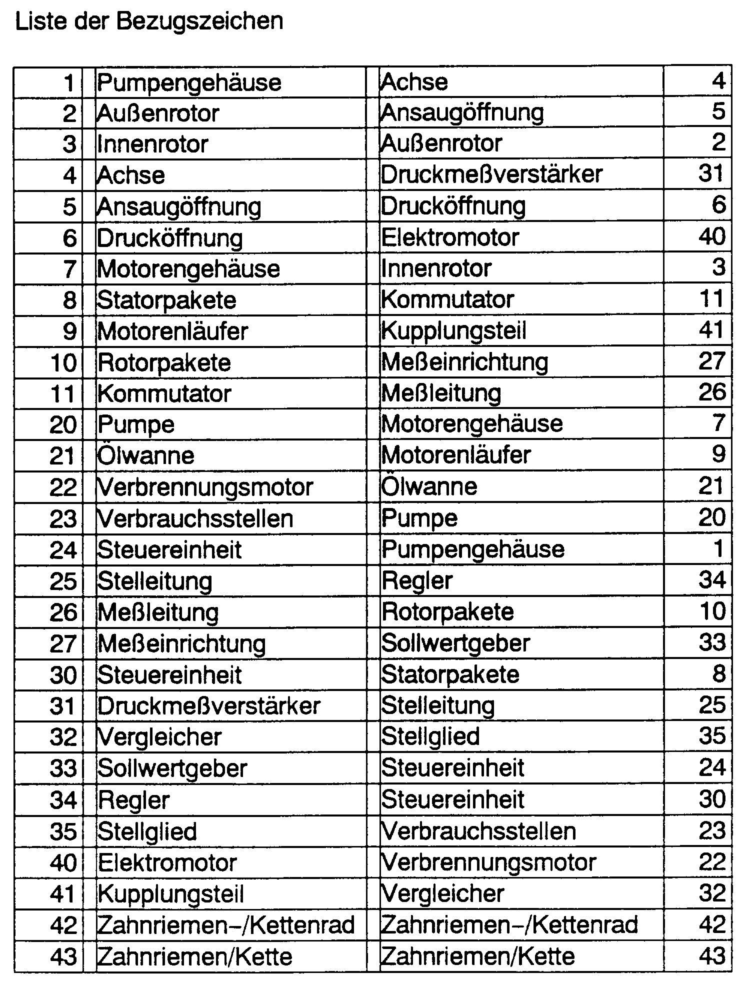

## Patentansprüche

1. Pumpenaggregat zur Förderung von flüssigen Schmiermitteln oder Wärmeträgern, insbesondere von Schmieröl in Verbrennungsmotoren, bestehend aus einer Förderpumpe mit mindestens einem Zufluß- und mindestens einem Abflußkanal sowie einer direkt auf die Förderpumpe wirkende Antriebseinheit,
*dadurch gekennzeichnet, daß*
die Antriebseinheit unabhängig von dem die fördernde Flüssigkeit nutzenden Verbraucher und dessen Betriebszustand wirkt.

2. Pumpenaggregat nach Anspruch 1,
*dadurch gekennzeichnet, daß*
die Antriebseinheit ein Elektromotor ist.

3. Pumpenaggregat nach Anspruch 1,
*dadurch gekennzeichnet, daß*
die Antriebseinheit durch eine selbsttätig wirkende Steuervorrichtung an- und abgeschaltet bzw. bezüglich ihrer Wirkungsweise beeinflußt wird.

4. Pumpenaggregat nach Ansprüchen 1 bis 3,
*dadurch gekennzeichnet, daß*
die selbsttätige Steuervorrichtung mindestens aus zwei Teilvorrichtungen besteht, deren eine, Druckmeßverstärker (31), Vergleicher (32) und Sollwertgeber (33), Informationen empfängt und verarbeitet und deren andere, Regler (34) und Stellglied (35), Regelungsinformationen abgibt, wobei eine zwangsläufige Verbindung zwischen den Teilen besteht, dergestalt, daß bei Abweichungen der eingehenden Informationen von vorgegebenen Sollwerten die abzugebenden Informationen nach festgelegten Regeln verändert werden.

5. Pumpenaggregat nach Ansprüchen 1 bis 4 für den Einsatz an einem Verbrennungsmotor eines Kraftfahrzeugs,
*dadurch gekennzeichnet, daß*
der Antrieb des Elektromotors durch die Bordstromversorgung des Kraftfahrzeugs geschieht, insbesondere durch dessen Lichtmaschine.

6. Pumpenaggregat gemäß den vorstehenden Ansprüchen,
*dadurch gekennzeichnet, daß*
die Antriebseinheit eine Kupplungseinrichtung aufweist, die bei Funktionsfähigkeit der Antriebseinheit und der Steuervorrichtung geöffnet ist und bei deren Ausfall eine Zwangsverbindung zwischen den umlaufenden Teilen des Verbrennungsmotors und der Förderpumpe herstellt.

7. Pumpenaggregat nach Anspruch 6,
*dadurch gekennzeichnet, daß*
die Kupplungsvorrichtung mit einer Schaltvorrichtung verbunden ist, die entweder innerhalb eines vorgegebenen Zeitintervalls oder abhängig von dem Versorgungsdruck im angeschlossenen Verbrennungsmotor diesen und damit das Kraftfahrzeug stillsetzt.

8. Pumpenaggregat nach Anspruch 7,
*dadurch gekennzeichnet, daß*
die Schaltvorrichtung mit einem Anzeigelement in der Armaturentafel des Kraftfahrzeugs verbunden ist, welches den Ausfall der Antriebseinheit oder der Steuervorrichtung sowie die ggf. bevorstehende Stillsetzung des Fahrzeugs dem Fahrer signalisiert.
